**Europäisches Patentamt**

(19) **European Patent Office**

**Office européen des brevets**

(11) Publication number : **0 409 788 B1**

## (12) EUROPEAN PATENT SPECIFICATION

(45) Date of publication of patent specification :
**15.06.94 Bulletin 94/24**

(51) Int. Cl.[5] : **C08L 3/02, C08L 23/08, C08L 33/02**

(21) Application number : **90810542.2**

(22) Date of filing : **16.07.90**

(54) **Polymer base blend compositions containing destructurized starch.**

(30) Priority : **20.07.89 US 382869**
**08.12.89 US 447730**

(43) Date of publication of application :
**23.01.91 Bulletin 91/04**

(45) Publication of the grant of the patent :
**15.06.94 Bulletin 94/24**

(84) Designated Contracting States :
**AT BE CH DE DK ES FR GB GR IT LI LU NL SE**

(56) References cited :
**EP-A- 0 032 802**
**EP-A- 0 304 401**
**WO-A-85/00176**
**US-A- 4 133 784**
**IND. ENG. CHEM. RES., vol. 26, 1987, pages 1659-1663, American Chemical Society; F.H. OTEY et al.: "Starch-based blown films. 2"**

(73) Proprietor : **WARNER-LAMBERT COMPANY**
**201 Tabor Road**
**Morris Plains New Jersey 07950 (US)**

(72) Inventor : **Lentz, David John, Dr.**
**23 Timber Lane**
**Randolph, N.J. 07869 (US)**
Inventor : **Sachetto, Jean-Pierre, Dr.**
**Duechelweiher 20**
**CH-4144 Arlesheim (CH)**
Inventor : **Silbiger, Jakob, Dr.**
**Oberwilerstrasse 72**
**CH-4054 Basel (CH)**

(74) Representative : **Silbiger, Jakob**
**c/o André Braun**
**European Patent Attorney**
**Murtengasse 5**
**CH-4051 Basel (CH)**

## Description

The present invention relates to polymer compositions capable of being formed by heat and pressure into articles having dimensional stability and enhanced physical properties, and to pre-mixes useful for preparing these compositions. These compositions and pre-mixes comprise destructurized starch and other polymers as described herein.

It is known that natural starch which is found in vegetable products and which contains a defined amount of water can be treated at an elevated temperature and in a closed volume, thereby at elevated pressures, to form a melt. The process is conveniently carried out in an injection molding machine or extruder. The starch is fed through the hopper onto a rotating, reciprocating screw. The feed material moves along the screw towards the tip. During this process, its temperature is increased by means of external heaters around the outside of the barrel and by the shearing action of the screw. Starting in the feed zone and continuing in the compression zone, the particulate feed becomes gradually molten. It is then conveyed through the metering zone, where homogenization of the melt occurs, to the end of the screw. The molten material at the tip can then be treated further by injection molding or extrusion or any other known technique to treat thermoplastic melts, to obtain shaped articles.

This treatment, which is described in the European Patent Application No. 84 300 940.8 (Publication No. 118 240) which patent is incorporated herein by reference, yields a substantially destructurized starch. As described in the above mentioned patent, the reason for this is that the starch is heated above the glass transition and the melting temperatures of its components. As a consequence, a melting and disordering of the molecular structure of the starch granules takes place, so that a substantially destructurized starch is obtained. The expression "destructurized starch" defines starch obtained by such thermoplastic melt formation. Reference is also made to European Patent Applications No. 88810455.1 (Publication No. 298,920), No. 88810548.3 (Publication No. 304,401) and No. 89810046.6 (Publication No. 326,517) which further describe destructurized starch, methods for making it, and uses of it. These application are also incorporated herein by reference.

It is preferred that the destructurized starch used in the present invention has been heated to a high enough temperature and for a time long enough so that the specific endothermic transition analysis as represented by a differential scanning calorimetry (DSC) curve indicates that the specific relatively narrow peak just prior to oxidative and thermal degradation has disappeared, as described in the above-mentioned European Patent Application No. 89810046.6 (Publication No. 326 517).

Destructurized starch is a new and useful material for many applications. An important property is its biodegradability. In humid air, however, destructurized starch takes up water from the air, thereby increasing its moisture content. As a consequence, a shaped article made from destructurized starch may under such conditions lose its dimensional stability. On the other hand such an article may dry out in low humidity and become brittle.

Thermoplastic starch has a unique set of properties and while these are very useful, they may limit its utility in cases where a softer, more resilient or harder, tougher polymer is desired.

Thermoplastic starch as mentioned can be extruded and molded into numerous useful shapes and profiles. However, the processing parameters such as water content, temperature, and pressure are critical and must be narrowly controlled to achieve reproducible quality products. This is a further disadvantage for many applications.

To overcome these potential limitations, it would be useful to increase the dimensional stability over a wide humidity range; to increase the toughness (measured as break energy); to increase the elasticity (measured as elongation); to decrease polymer stiffness (measured as Young's modulus) and increase the hardness.

Broadening processing latitude increases the variety of shapes and composites and decreases the need for close controls. It would therefore also be useful to improve the control of the melt strength, e.g. increasing the processing latitude for extruding, injection molding, film blowing or fiber drawing and to control the surface tack and adhesion to other substrates.

Conventional thermoplastic materials are hydrophobic, substantially water-insoluble polymers which are conventionally processed in the absence of water and volatile materials. Starch to the contrary forms a melt in the presence of water but decomposes at elevated temperature, i.e. around 240°C. It was therefore expected that such a starch melt could not be used as a thermoplastic component together with hydrophobic, substantially water-insoluble polymeric materials not only because starch forms a melt in the presence of water as described above, but also because of its chemical structure and hydrophilic nature.

It has now been found that starch, when heated in a closed volume as described above to form a melt of destructurized starch, is substantially compatible in its processing with melts formed by hydrophobic substantially water insoluble thermoplastic polymers and that the two types of molten materials shown an interesting combination of properties, especially after the melt has solidified.

One very important aspect is the surprisingly improved dimensional stability of such destructurized starch blended with such hydrophobic thermoplastic materials. Such polymer compositions are described in copending European Patent application No. 89810078.9 (Publication No. 327,505) which is incorporated herein by reference. Although articles made from such compositions possess better dimensional stability than those made from destructurized starch alone, the physical properties of the therein-described compositions are not as good as might be desired for some end uses. In particular, it is important that articles made from destructurized starch compositions retain sufficient strength and dimensional stability to perform their desired function while still being biodegradable after disposal.

It has now been found that articles made from such destructurized starch blended with specific hydrophobic thermoplastic materials as described herein show a surprising increase in all or a part of their physical properties and behaviour of their melts as to overcome the limitations as explained above. Moreover it was surprisingly found that many of the blends described herein show a significantly improved dimensional stability in humid air compared with non-blended destructurized starch whilst retaining a surprisingly high degree of disintegration in contact with liquid water which in consequence leads to a high degree of biodegradability.

EP-A-0 118 240 as mentioned above refers to destructurized starch and method of making the same. US-A-4 133 784 refers to a composition of a water-dispersible ethylene acrylic acid (EAA) copolymer combined with a starchy material to be used as biodegradable films. Methods of preparation of these films are also referred to, which methods include casting and extruding heated aqueous dispersions of the starch material, preferably gelatinized starch, and EAA and also milling and rolling dry mixtures into sheet or films. US-A-4 133 784 does not disclose compositions wherein the starch is destructurized, or compositions according to the invention as described herein comprising the three components a), b) and c) and in concentrations as given herein. EP-A-0 032 802 refers to an improvement over the above mentioned US-A-4 133 784 by using chemical means, i.e. in that ammonia is used, in the process. WO 85/00176 refers to the same subject matter but wherein ammonia is replaced by a strong alkali such as sodium hydroxide. The addition of ammonia or strong alkali have severe disadvantages inter alia with respect to corrosion. Ind. Eng. Chem. Res., Vol. 26, 1987, pages 1656-1663 refers to the addition of ammonia, urea and polyols to starch/poly(ethylene-co-acrylic acid) compositions. This is a modification of the process disclosed in US-A-4 133 784. None of these four documents discloses destructurized starch or compositions comprising the three components and in concentrations as disclosed according to the present invention. EP-A-0 304 401 discloses a pre-extrusion process for producing shaped article from destructurized starch. This document does not disclose the addition of copolymers such as EAA or hydrophobic thermoplastic polymers to destructurized starch nor does this document disclose the three component composition as taught in the present invention. EP-A-0 327 505 was filed prior to the filing date of the present patent application but published on August 9, 1989. This document refers to compositions comprising water-containing destructurized starch and at least one essentially water-insoluble synthetic thermoplastic polymer. EP-A-0 327 505 does not disclose the three component system, as taught according to the present invention.

In order to achieve such properties, it has been found useful to make polymer compositions comprising: a) destructurized starch, b) at least one compound selected from the group consisting of polymers and copolymers which contain carboxylic groups which partially or wholly are present in the form of their salts and wherein said polymers or copolymers do not contain further functional groups (referred to herein as "component b)"), and optionally c) a substantially water-insoluble polymer different from those defined as component b).

The invention comprises the ternary composition of destructurized starch, component b), and at least one substantially water-insoluble polymer (component c)). These compositions may be in the form of powdery mixtures of the components, melts, or solid forms. The invention also includes methods for making and using both above described compositions and shaped articles made therefrom.

Specifically the present invention refers to composition consisting of

a) destructurized starch produced by heating a starch having a water content of 5 to 40% by weight based on the starch/water component, in a closed volume under shear; and at a temperature of 130°C to 190°C above the glass transition and the melting points of its components and at a pressure of up to $150 \times 10^5$ $N/m^2$ to form a melt whereby the pressure corresponds at a minimum to the vapour pressure of water at the temperature used and heating the melt for a time long enough to obtain a melting of the molecular structure of the starch granules and a homogenization of the melt;

b) at least one thermoplastic ethylene-co-acrylic acid copolymer or ethylene-co-methacrylic acid copolymer wherein the copolymers contain carboxyl groups in their salt form;

c) a thermoplastic polymer which undergoes melt formation at a set processing temperature within the range of 95°C to 190°C and is selected from (i) the group consisting of polyolefines, vinyl polymers, polystyrenes, polyacrylonitriles, polyacetals, thermoplastic polyamides, thermoplastic polyesters, thermoplastic polyurethanes polycarbonates, poly(alkylene terephthalates), polyarylethers, (ii) ethylene vinyl acetate copolymers, styrene/acrylonitrile copolymers, and mixtures thereof;

d) optionally one or more materials selected from the group consisting of fillers, lubricants, mold release agents, plasticizers, foaming agents, stabilizers, flow accelerators, coloring agents, pigments and mixtures thereof;

wherein the ratio of the destructurized starch to component b) varies from 99:1 to 95:5, and wherein the ratio of component b) to component c) is from 50:1 to 1:99 and wherein the sum of the components b) and c) constitutes at least 10% and up to 80% by weight of the entire composition.

The present invention includes said polymer compositions in the form of powdery mixtures of their components, in the form of melts, or in solidified form.

Component b) is chosen as described herein to be substantially compatible with the starch and also to promote the compatibility of component c) with the combination of starch and component b).

The present invention further refers to a method of producing said polymer compositions in the molten or solid form as well as a method of producing shaped articles from said polymer compositions, and to the resulting shaped articles made therefrom.

The polymer compositions of the present invention are prepared by admixing destructurized starch, component b) and component c) and any further additives. This mixture is then heated in a closed volume to elevated temperatures until a homogeneous melt is obtained, and shaped articles can be formed therefrom.

An alternate method of producing the polymer compositions of the present invention comprises: Heating starch which is in a condition to be destructurized in a closed volume to elevated temperatures and at elevated pressures for a time sufficient to destructurize the starch and form a melt; adding component b) as well as other polymer or polymers and/or additives before, during or after such starch destructurization; and continuing to heat the mixture until a homogenous melt is obtained. It is preferred that component b) and component c), as well as other additives be combined with the starch and the combination formed into a melt. The starch in this combination may be already wholly or partially destructurized or the destructurization may take place during melt formation.

The present invention further refers to the process of working said polymer composition under controlled water content, temperatures and pressure conditions as a thermoplastic melt wherein said working process is any known process, such as, for example injection molding, blow molding, extrusion, coextrusion, compression molding, vacuum forming, thermoforming or foaming. All of these processes are collectively referred to herein as "forming".

The term "starch" as used herein includes chemically substantially non-modified starches as for example carbohydrates of natural, vegetable origin, composed mainly of amylose and/or amylopectin. They can be extracted from various plants, examples being potatoes, rice, tapioca, corn (maize), pea, and cereals such as rye, oats and wheat. Mixtures of starches obtained from these sources are contemplated. Preferred is starch made from potatoes, corn, wheat or rice. It further includes physically modified starches such as gelatinized or cooked starches.

It further includes pre-extruded starches, as described in the above-referenced European Patent Application No. 89810046.6 (Publication No. 326,517).

As described above, it has been found that starches, e.g. with a water content within the range of about 5 to about 40 % by weight based on the weight of the composition, undergo a specific narrow endothermic transition on heating to elevated temperatures and in a closed volume just prior to the endotherm change characteristic of oxidative and thermal degradation. The specific endothermic transition can be determined by differential scanning calorimetric analysis (DSC) and is indicated on the DSC-diagram by a specific relatively narrow peak just prior to the endotherm characteristic of oxidative and thermal degradation. The peak disappears as soon as the mentioned specific endothermic transition has been undergone. The term "starch" includes also treated starches wherein said specific endothermic transition has been undergone. Such starch is described in the European Patent Application 89810046.6 (Publication No. 326,517).

Although at the current time, destructurization of starch requires the presence of water in ranges as disclosed herein, the present inventive compositions also contemplate the use of destructurized starch prepared by other methods, e.g. without the use of water.

The water content of such a starch/water composition is preferably about 5 to about 40 % water by weight of the starch/water component and preferably about 5 to about 30 %. However, in order to work with the material near its equilibrium water content to which it gets when it is finally exposed to the free atmosphere, a water content of 10 to about 22 %, preferably of about 14 to about 18 % by weight calculated based on the starch/water component should be used in processing and is preferred.

The component b) is a compound selected from the group consisting of polymers and copolymers which contain carboxylic groups in the form of their salts as further defined herein below.

EP 0 409 788 B1

Polymers and copolymers thus obtained are known per se and may have a general formula wherein the number of repeating units varies for each individual type of polymer resp. copolymer as e.g. described in "Encyclopaedia of Polymer Science and Technology, Interscience Publ. Vol. 14, 1971".

The polymers and copolymers of component b) do not contain further functional groups. The term "functional group" as used herein includes all known polar groups that may be bound to the polymer chain such as, for example, hydroxyl alkoxy, carboxylalkyl, alkyl carboxy, halo, pyrrolidono, acetal and the like.

Copolymers in their salt form useful as component b) therefore contain carboxyl groups in their salt form as well as other units as are obtained by copolymerization of acrylic acid, methacrylic acid with ethylene with subsequent salt formation. Such copolymers are known.

Preferred is a copolymer of said acids with ethylene, e.g. the ethylene-acrylic-acid copolymer in the form of its salt or a ethylene-methacrylic acid copolymer in the form of its salt.

The polymers and copolymers of the present invention contain carboxylate groups of the formula

-COOM

wherein M is an alkali cation, preferably sodium.

Preferably M is sodium wherein the polymer contains also free carboxyl groups.

As mentioned above, the polymer composition comprising the components a) and b) contains one or more substantially water-insoluble hydrophobic polymers (component c), as well as further additives.

The component c) is a substantially water-insoluble polymer or a mixture of such substantially water-insoluble polymers. Component c) is preferably present in an amount effective to enhance the physical properties of articles made from the composition of the invention (which amount is sometimes referred to herein as an "effective amount" of component c)), for example increase of dimensional stability of final products made therefrom or adjust the degree of biodegradability.

As used herein a "substantially water-insoluble thermoplastic polymer" is a polymer which preferably absorbs less than 10 % of water, preferably less than 5 % of water per 100 grams of the polymer at room temperature and preferably at a rate of less than 2 % per 100 grams of the polymer at room temperature.

Examples of substantially water-insoluble thermoplastic materials are polyolefines, such as polyethylene (PE), polyisobutylenes, polypropylenes; vinyl polymers such as poly(vinyl acetates); polystyrenes; polyacrylonitriles (PAN); polyacetals; thermoplastic polycondensates such as polyamides (PA), polyesters, polyurethanes, polycarbonates, poly(alkylene terephthalates); polyarylethers.

Further included are substantially water-insoluble thermoplastic copolymers known such as alkylene/vinyl ester-copolymers preferably ethylene/vinyl acetate-copolymers (EVA); styrene/acrylonitrile-copolymers (SAN); as well as mixtures thereof.

Preferred from these are those which undergo melt formation at a set processing temperature preferably within the range of 95°C to about 190°C.

Also preferred are those polymers containing polar groups such as ether, amide, or urethane groups.

Such substantially water-insoluble thermoplastic polymers may be added in any desired amount as described herein.

Such polymers may be used in any known form. Their molecular weight is also generally known in the art. It is also possible to use such polymers of relatively low molecular weight (oligomers) . The choice of a particular molecular weight range is a matter of optimization and routine experimentation known to those skilled in the art.

In the composition according to this invention, the two components a) and b) or the three components a), b) and c) always add up to 100 % and the values of the components given in percent hereinbelow refer to the sum of 100 %.

The ratio of destructurized starch to the component b) is 99 : 1 to 95 : 5.

The ratio of destructurized starch to the sum of the components b) and c) can be 1:99 to 99:1. It is however preferred that the destructurized starch contributes noticeably to the properties of the final material. Therefore, it is preferred that the destructurized starch is present in an amount of at least 20 %, more preferably in the range of up to 90 % by weight of the entire composition. That is, the sum of the components b) and c) are present in amounts of 80 % or less, more preferably in the range of 10 % by weight of the entire composition.

Component b) is a relatively polar material. When it functions in the present compositions in combination with component c), it is able to mix more readily with a more polar component c) than with a less polar one. Accordingly, with more polar components c), relatively less of component b) will be required than with less polar ones. The skilled worker will be able to select appropriate ratios of components b) and c) to obtain a substantially homogenous melt composition.

If the destructurized starch contains water, the percentage of this destructurized starch component is meant to be the destructurized starch/water component, i.e. including the weight of water.

The starch may be mixed prior to destructurization with additives as named hereinbelow to yield a free

5

flowing powder useful for continuous processing and is destructurized and granulated before it is mixed with component b) or b) and c) or the other optionally added components. The other components to be added are preferably granulated to a granular size equal to that of the granulated destructurized starch.

However, it is possible to process native starch or pre-extruded and/or destructurized granulated or powdered starch together with powdered or granulated additives and/or the polymeric material in any desired mixture or sequence.

Thus, it is preferred that components a), b) and c) as well as other conventional additives be mixed in a standard mixer. This mixture can then be passed through an extruder to produce granulates or pellets as one form of shaped articles which are also useful as starting material for processing into other articles. However, it is possible to avoid granulating and to process the obtained melt directly using down-stream equipment to produce films, blown films included, sheets, profiles, pipes, tubes, foams or other shaped articles. The sheets can be used for thermoforming.

It is preferred that fillers, lubricants and/or plasticizers be added to the starch before destructurization. However, the addition of coloring agents as well as of the components b), c) and additives other than the aforementioned can be added before, during or after destructurization.

The substantially destructurized starch/water component or granules have a preferred water content in the range of about 10 to about 22 % by weight of the starch/water component, more preferably about 12 to about 19 % and most preferably about 14 to about 18 % by weight of the starch/water component.

The water content described above refers to the percentage of water relative to the weight of the starch/water component within the total composition and not to the weight of the total composition itself, which would include also the weight of any added substantially water-insoluble thermoplastic polymer.

In order to destructurize the starch and/or to form a melt of the new polymeric composition according to this invention, it is suitably heated in a screw and barrel of an extruder for a time long enough to effectuate destructurization and melt formation. The temperature is preferably within the range of 130°C to 190°C depending on the type of starch used. For this destructurization and melt formation, the composition is heated in a closed volume. A closed volume can be a closed vessel or the volume created by the sealing action of the unmolten feed material as happens in the screw and barrel of injection molding or extrusion equipment. In this sense the screw and barrel of an injection molding machine or an extruder is to be understood as being a closed vessel. Pressures created in a closed vessel correspond to the vapour pressure of water at the used temperature but of course additional pressure may be applied and/or generated as normally occurs in a screw and barrel. The preferred applied and/or generated pressures are in the range of pressures which occur in extrusion and are known per se, e.g. from 5 to 150 x $10^5$ N/m$^2$ preferably from 5 to 75 x $10^5$ N/m$^2$ and most particularly from 5 to 50 x $10^5$ N/m$^2$. If the thus-obtained composition is comprised only of destructurized starch, it may be granulated and ready to be mixed with the further components according to a chosen mixing and processing procedure to obtain the granular mixture of the destructurized starch/polymer starting material to be fed to the screw barrel.

However, the obtained melt in the screw and barrel may be injection molded directly into a suitable mold, i.e. directly further processed to a final product if all necessary components are already present.

Within the screw, the granular mixture obtained as described above is heated to a temperature which is generally within the range of 130°C to about 190°C. Preferably, such mixture is heated to a sufficiently high temperature and for a time long enough until the endothermic transition analysis (DSC) indicates that the specific relatively narrow peak just prior to the endotherm characteristic of oxidative and thermal degradation of starch has disappeared.

The minimum pressures under which the melts are formed correspond to the water vapour pressures produced at said temperatures. The process is carried out in a closed volume as explained above, i.e. in the range of the pressures which occur in extrusion or molding processes and known per se, e.g. from zero to 150 x $10^5$ N/m$^2$ preferably from zero to 75 x $10^5$ N/m$^2$ and most particularly from zero to 50 x $10^5$ N/m$^2$.

When forming a shaped article by extrusion the pressures are preferably as mentioned above. If the melt according to this invention is, e.g., injection molded, the normal range of injection pressures used in injection molding is applied, e.g. from 300 x $10^5$ N/m$^2$ to 3000 x $10^5$ N/m$^2$ and preferably from 700 x $10^5$ to 2200 x $10^5$ N/m$^2$.

Accordingly the present invention provides a thermoplastic destructurized starch product formed by the process comprising:

1) providing a mixture consisting of:
- a starch composed mainly of amylose and /or amylopectin and having a water content of from 5% to 40% by weight;
- at least one polymer as defined herein above as component b);
- a thermoplastic polymer as defined herein above as component c);

- optionally one or more materials selected from the group consisting of fillers, lubricants, mold release agents, plasticizers, foaming agents, stabilizers, flow accelerators, coloring agents, pigments and mixtures thereof;

wherein the ratio of the destructurized starch to component b) varies from 99:1 to 95:5, and wherein the ratio of component b) to component c) is from 50:1 to 1:99, and wherein the sum of the components b) and c) constitutes at least 10% and up to 80% by weight of the entire composition;

2) heating said mixture in the screw and barrel of an injection molding machine or an extruder at a temperature of 130°C to 190°C and at a pressure of up to $150 \times 10^5$ N/m$^2$ to form a melt and heating the melt for a time long enough to obtain a destructurization of the starch and a homogenization of the melt;

3) shaping the melt into an article; and

4) allowing the shaped article to cool to a solidified dimensionally stable article.

Various hydrophilic polymers may be used as additives. These include water-soluble and water-swellable polymers. As such it includes animal gelatin, vegetable gelatins; proteins such as sunflower protein, soybean proteins, cotton seed proteins, peanut proteins, rape seed proteins, acrylated proteins; water-soluble polysaccharides, alkyl celluloses, hydroxyalkyl celluloses and hydroxyalkylalkyl celluloses, such as methyl cellulose, hydroxymethyl cellulose, hydroxyethyl cellulose, hydroxypropyl cellulose, hydroxyethylmethyl cellulose, hydroxpropylmethyl cellulose, hydroxybutylmethyl cellulose, cellulose esters and hydroxyalkyl cellulose esters such as cellulose acetylphtalate (CAP), hydroxypropylmethyl cellulose (HPMCP); analogous known polymers made from starch; water-soluble or water-swellable synthetic polymers such as: polyacrylates, polymethacrylates, polyvinyl alcohols, shellac and other similar polymers.

Preferred are synthetic polymers, most preferably polyacrylates, polymethacrylates, polyvinyl alcohols.

Such hydrophilic polymers may optionally be added up to 50 % based on the starch/water component, preferably up to 30 % and most preferably between 5 % and 20 % based on the starch/water component. If any hydrophilic polymer is added, its mass should be considered along with the starch in determining the appropriate amount of water in the composition.

Other useful additives may be e.g. adjuvants, fillers, lubricants, mold release agents, plasticizers, foaming agents, stabilizers, coloring agents, pigments, extenders, chemical modifiers, flow accelerators, and mixtures thereof.

Examples for fillers are inorganic fillers, such as the oxides of magnesium, aluminum, silicon, titanium, etc. preferably in a concentration in the range of 0.02 to 50 % by weight preferably 0.20 to 20 % based on the total weight of all the components.

Examples for lubricants are stearates of aluminum, calcium, magnesium and tin as well as talc, silicones, etc. which may be present in concentrations of 0.1 to 5 % preferably at 0.1 to 3 % based upon the weight of the total composition.

Examples of plasticizers include low molecular poly(alkylene oxides), such as poly(ethylene glycols), poly(propylene glycols), poly(ethylene-propylene glycols); organic plasticizers of low molar masses, such as glycerol, pentaerythritol, glycerol monoacetate, diacetate or triacetate; propylene glycol, sorbitol, sodium diethylsulfosuccinate, etc., added in concentrations ranging from 0.5 to 15 %, preferably ranging from 0.5 to 5 % based on the total weight of all the components. Examples of colouring agents include known azo dyes, organic or inorganic pigments, or colouring agents of natural origin. Inorganic pigments are preferred, such as the oxides of iron or titanium, these oxides, known per se, being added in concentrations ranging from 0.001 to 10 %, preferably 0.5 to 3 %, based on the weight of all the components.

There may further be added compounds to improve the flow properties of the starch material such as animal or vegetable fats, preferably in their hydrogenated form, especially those which are solid at room temperature.

These fats have preferably a melting point of 50°C or higher. Preferred are triglycerides of $C_{12}$ -, $C_{14}$ -, $C_{16}$ -, and $C_{18}$ - fatty acids.

These fats can be added alone without adding extenders or plasticizers.

These fats can advantageously be added alone or together with mono- and/or diglycerides or phosphatides, especially lecithin. The mono- and diglycerides are preferably derived from the types of fats described above, i.e. from $C_{12}$ -, $C_{14}$ -, $C_{16}$ -, and $C_{18}$ - fatty acids.

The total amount of fats, mono-, diglycerides and/or lecithins used are up to 5 % and preferably within the range of 0.5 to 2 % by weight of the total weight of starch and any added hydrophilic polymer.

The materials may further contain stabilizers, such as antioxydants, e.g. thiobisphenols, alkylidenbisphenols secondary aromatic amines; light stabilizers such as UV-absorbers and UV-quenchers; hydroperoxide decomposer; free-radical scavengers; stabilizers against microorganisms.

The compositions of the invention form thermoplastic melts on heating and in a closed volume, i.e. under conditions of controlled water-content and pressure. Such melts can be processed just like conventional thermoplastic materials, using, for example, conventional apparatus for injection molding, blow molding, extrusion and coextrusion (rod, pipe and film extrusion), compression molding, foaming, to produce known articles. The articles include bottles, sheets, films, packaging materials, pipes, rods, laminated films, sacks, bags, pharmaceutical capsules, granules, powders or foams.

For example, these compositions may be used to prepare low density packaging materials (e.g. foams) by well-known methods. Conventional blowing agents may be utilized if desired or, for certain compositions, the water itself may act as the blowing agent. Open cell and closed cell foams may be produced as desired by varying the composition and processing condtions. These foams produced from the present compositions will demonstrate improved properties (e.g., dimensional stability, moisture resistance when compared with foams made of starch without incorporation of the components b) and c) according to this invention.

These compositions may be used as carrier materials for active substances, and may be mixed with active ingredients such as pharmaceuticals and/or agriculturally active compounds such as insecticides or pesticides for subsequent release applications of these ingredients. The resulting extruded materials can be granulated or worked to fine powders.

The following examples are provided to further explain and exemplify the invention but not to limit the scope thereof, which scope is defined by the appended claims.

Example 1

(a) 9500 g of potato starch containing 15.1 % water are placed in a high speed mixer and 425 g of polyethylene-co-methacrylic acid, sodium salt (component b)) containing 90 % by weight of ethylene and 10 % by weight of methacrylic acid sold as Surlyn 8528 by Du Pont; 80.75 g of hydrogenated fat (lubricant release agent) sold as Boeson VP by Boehringer Ingelheim, 40.37 g of a melt flow accelerator (lecithin) sold as Metarin P by Lucas Meyer are added under stirring. The water content of the final mixture is 14.3 %.

(b) 10,000g of the mixture prepared under (a) are fed through a hopper into a Werner & Pfleiderer co-rotating twin screw extruder (model Continua 37).

The temperature profile of the four sections of the barrel is respectively 20°C/ 180°C/ 180°C/ 80°C.

Extrusion is carried out with a mixture output of 8 kg/hr (screw speed 200 rpm). Water is added at the inlet with a flow rate of 2.1 kg/hr. The water content of the material during extrusion is therefore 32 %. In the last section of the extruder 500 mbar reduced pressure is applied to remove part of the water as water vapour.

The water content of the granulates is 16.9 % as measured after they have equilibrated at room temperature.

(c) The granulates of the pre-blended mixture as obtained under (b) ($H_2O$ content: 16.9 %) are fed through a hopper to an injection molding machine Arburg 329-210-750 for the production of tensile test pieces. The temperature profile of the barrel is: 90°C/ 175°C/ 175°C/ 175°C.

The shot weight is 7.9 g, the residence time 450 sec., the injection pressure 2090 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile test apparatus.

The samples are measured at room temperature using an extension rate of 10 mm per minute. Results are presented in Table 1 and compared with those of the tensile test pieces obtained from the same starch processed in a similar way but in absence of components b) and c).

Table 1

| | unbl. starch | Example Nos. | | | | | | | | | | |
|---|---|---|---|---|---|---|---|---|---|---|---|---|
| | | 1 | 3 | 4 | 5 | 6 | 7 | 8 | 9 | 10 | 11 | 12 |
| break strain % | 22 | 27 | 29 | 57 | 62 | 63 | 28 | 24 | 69 | 250 | 48 | 80 |
| break energy kJ/m$^2$ | 325 | 365 | 340 | 410 | 315 | 330 | 380 | 310 | 485 | 900 | 575 | 490 |

Example 2

Example 1 is repeated except that the ratio of the components is varied as given in Table 2. For comparison perspective, Example 1 is shown as Blend No. 1.

Table 2

| Blend No. | starch: component b)+c) (weight ratio) | component b): component c) (weight ratio) |
|---|---|---|
| 2 | 50 : 50 | 100 : 0 |
| 3 | 60 : 40 | 99 : 1 |
| 4 | 70 : 30 | 50 : 1 |
| 5 | 80 : 20 | 20 : 1 |
| Ex.1 | 91.5: 8.5 | 10 : 1 |
| 6 | 90 : 10 | 1 : 1 |
| 7 | 94 : 6 | 1 : 10 |
| 8 | 98 : 2 | 1 : 50 |
| 9 | 99 : 1 | 1 : 99 |

The resulting injection molded polymers are tougher and more resistant to humid air than the unblended starch polymer. The toughness as judged by resistance to breaking upon bending increases from blend 9 to blend 2 in concert with the combined increase in polyethylene-comethacrylic acid, sodium salt (Surlyn 8528) content. While the resistance to softening in humid atmosphere is improved in all cases relative to unblended starch, the resistance of blends 1,4,5 and 6 are particularly good. These results illustrate the unexpected combinations as benefits in performance.

Example 3

(a) 8900 g of potato starch containing 15 % water are placed in a high speed mixer and 765 g of polyethylene-co-methacrylic acid, sodium salt (component b) containing 90 % by weight of ethylene and 10 % by weight of methacrylic acid sold as Surlyn 8528 by Du Pont; 85 g of polyethylene-co-vinyl acetate (component c)) containing 80 mole % ethylene and 20 mole % vinyl acetate, sold as Escorene UL 02020 by Exxon; 85 g of polyethylene (component c)) Lupolen 2410T sold by BASF; 75.7 g of hydrogenated fat (lubricant release agent) sold as Boeson VP by Boehringer Ingelheim, 37.8 g of a melt flow accelerator (lecithin) sold as Metarin P by Lucas Meyer are added under stirring. The water content of the final mixture is 13 %.

(b) 10,000g of the mixture prepared under (a) are fed through a hopper into a Werner & Pfleiderer co-rotating twin screw extruder (model Continua 37).

The temperature profile of the four sections of the barrel is respectively 20°C/ 180°C/ 180°C/ 80°C.

Extrusion is carried out with a mixture output of 8.7 kg/hr (screw speed 200 rpm). Water is added at the inlet with a flow rate of 2.1 kg/hr. The water content of the material during extrusion is therefore 31 %. In the last section of the extruder 400 mbar reduced pressure is applied to remove part of the water as water vapour.

The water content of the granulates is 16.9 % as measured after they have equilibrated at room temperature.

(c) The granulates of the pre-blended mixture as obtained under (b) ($H_2O$ content: 16.9 %) are fed through a hopper to an injection molding machine Arburg 329-210-750 for the production of tensile test pieces. The temperature profile of the barrel is: 90°C/ 165°C/ 165°C/ 165°C.

The shot weight is 7.6 g, the residence time 450 sec., the injection pressure 2100 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile test apparatus as given in Example 1. Results are presented in Table 1.

Example 4

(a) 5000 g of potato starch containing 15 % water are placed in a high speed mixer and 4250 g of polyethylene-co-methacrylic acid, sodium salt (component b)) containing 90 % by weight of ethylene and 10 % by weight of methacrylic acid sold as Surlyn 8528 by Du Pont; 42.5 g of hydrogenated fat (lubricant/release agent) Boeson VP and 21.3 g of a melt flow accelerator (lecithin/Metarin P) are added under stirring. The water content of the final mixture is 7.4 %.

(b) 9000 g of the mixture prepared under (a) are fed through a hopper into the same twin-screw co-rotating extruder described in Example 1. The extrusion of the mixture is carried out with the following temperature profile: 20°C/ 220°C/ 220°C/ 80°C. The other parameters of the extrusion experiment are the following:

| | |
|---|---|
| material output: | 8 kg/hr |
| screw speed: | 200 rpm |
| water added: | 2.1 kg/hr |
| reduced pressure (last section) | 70 mbar |
| water-content during extrusion: | 26.7 % |

The water content of the granulates is 17.1 % as measured after they have equilibrated at room temperature.

(c) The granulates obtained under (b) are processed using the same injection molding machine described in (c) of Example 1. The temperature profile of the barrel is 90°C/ 175°C/ 175°C/ 175°C. The other processing parameters were:

shot weight:               6.4 g

10

residence time: 450 sec.
injection pressure; 1100 bar
back pressure: 80 bar
screw speed: 180 rpm

The tensile test pieces thus produced are conditioned and tested on a Zwick tensile test apparatus as described in (d) of Example 1.

Results are presented in Table 1.

Example 5

(a) 4000 g of potato starch containing 15.2 % water are placed in a high speed mixer and 1700 g of polyethylene-co-methacrylic acid, sodium salt (component b)) containing 90 % by weight of ethylene and 10 % by weight of methacrylic acid sold as Surlyn 8528 by Du Pont; 2550 g of polyethylene-co-vinyl acetate (component c)) containing 80 mole % ethylene and 20 mole % vinyl acetate sold as Escorene UL02020 by Exxon; 850 g of polyethylene (component c)) sold as Lupolen 2410T by BASF. 34 g of hydrogenated fat (lubricant/ release agent) Boeson VP; 17 g of a melt flow accelerator (lecithin) Metarin P are added under stirring. The water content of the final mixture is 5.3 %.

(b) 8000 g of the mixture prepared under (a) are fed through a hopper into the same twin screw co-rotating extruder described in Example 1.

The extrusion of the mixture is carried out with the following processing parameters:

temperature profile: 20°C/ 180°C/ 180°C/ 80°C
material output: 8.4 kg/hr
screw speed: 200 rpm
water added: 2.1 kg/hr
reduced pressure (last section): 450 mbar
water content during extrusion: 25 %

The water content of the granulates is 13.9 % after they have equilibrated at room temperature. They are then brought to a water content of 17 % by spraying water under stirring in a standard mixer.

(c) The granulates of (b) are processed using the same injection molding machine of Example 1. The processing parameters are the following:

temperature profile: 90°C/ 175°C/ 175°C/ 175°C
shot weight: 6 g
residence time; 450 sec
injection molding: 825 bar
back pressure; 80 bar
screw speed: 180 rpm

The tensile test pieces thus produced are conditioned and tested on a Zwick tensile test apparatus described in (d) of Example 1.

Results are presented in Table 1.

Example 6

(a) 4000 g of potato starch containing 15.1 % water are placed in a high speed mixer and 5100 g of polyethylene-co-methacrylic acid, sodium salt (component b)) containing 90 % by weight of ethylene and 10 % by weight of methacrylic acid, sold as Surlyn 8528 by Du Pont; 34 g of hydrogenated fat (lubricant/ release agent) Boeson VP; 17 g of a melt flow accelerator (lecithin) Metarin P are added under stirring. The water content of the final mixture is 5 %.

(b) 9000 g of the mixture prepared under (a) are fed through a hopper into the same twin-screw co-rotating extruder described in Example 1.

The extrusion of the mixture is carried out with the following processing parameters:

temperature profile: 20°C/ 180°C/ 180°C/ 80°C
material output: 8.3 kg/hr
screw speed: 200 rpm
water added: 2.5 kg/hr
reduced pressure (last section): 300 mbar
water content during extrusion: 27.6 %

The water content of the granulates is 16.4 % after they have equilibrated at room temperature.

(c) The granulates obtained under (b) are processed using the same injection molding machine described in (c) of Example 1. The processing parameters are the following:

| | |
|---|---|
| temperature profile: | 90°C/ 175°C/ 175°C/ 175°C |
| shot weight: | 6 g |
| residence time; | 450 sec |
| injection molding: | 1100 bar |
| back pressure; | 80 bar |
| screw speed: | 180 rpm |

The tensile test pieces thus produced are conditioned and tested on a Zwick tensile test apparatus described in (d) of Example 1.

Results are presented in Table 1.

Example 7

(a) 9000 g of potato starch containing 15.1 % water are placed in a high speed mixer and 850 g of polyethylene-co-methacrylic acid, sodium salt (component b)) containing 85 % by weight of ethylene and 15 % by weight of methacrylic acid, sold as Surlyn 8940 by Du Pont; 76.5 g of hydrogenated fat (lubricant/ release agent) Boeson VP; 38.3 g of a melt flow accelerator (lecithin) Metarin P are added under stirring. The water content of the final mixture is 12.9 %.

(b) 9000 g of the mixture prepared under (a) are fed through a hopper into the same twin-screw co-rotating extruder described in Example 1.

The extrusion of the mixture is carried out with the following processing parameters:

| | |
|---|---|
| temperature profile: | 20°C/ 80°C/ 80°C/ 80°C |
| material output: | 8.6 kg/hr |
| screw speed: | 200 rpm |
| water added: | 2.1 kg/hr |
| (last section): | 30 mbar |
| water content during extrusion: | 31 % |

The water content of the granulates is 15.6 % after they have equilibrated at room temperature. They are then brought to a water content of 17 % by spraying water under stirring in a standard mixer.

(c) The granulates obtained under (b) are processed using the same injection molding machine described in (c) of Example 1. The processing parameters are the following:

| | |
|---|---|
| temperature profile: | 90°C/ 165°C/ 165°C/ 165°C |
| shot weight: | 7.9 g |
| residence time; | 450 sec |
| injection molding: | 2020 bar |
| back pressure; | 80 bar |
| screw speed: | 180 rpm |

The tensile test pieces thus produced are conditioned and tested on a Zwick tensile test apparatus described in (d) of Example 1.

Results are presented in Table 1.

Example 8

(a) 8900 g of potato starch containing 15.0 % water are placed in a high speed mixer and 765 g of polyethylene-co-methacrylic acid, sodium salt (component b)) containing 85 % by weight of ethylene and 15 % of methacrylic acid sold as Surlyn 8920 by Du Pont; 85 g of polyvinyl alcohol-co-vinyl acetate (component c)) containing 11 - 13 mole % of vinyl acetate and 87 - 89 mole % of vinyl alcohol, sold as Airvol 540S by Air Products; 85 g of polymethyl(methacrylate) (component c)) sold as Degalan G-6 by Degussa; 75.7 g of hydrogenated fat (lubricant/ release agent) Boeson VP; 37.8 g of a melt flow accelerator (lecithin) Metarin P are added under stirring. The water content of the final mixture is 13.3 %.

(b) 9000 g of the mixture prepared under (a) are fed through a hopper into the same twin-screw co-rotating extruder described in Example 1.

The extrusion of the mixture is carried out with the following processing parameters:

| | |
|---|---|
| temperature profile: | 20°C/ 80°C/ 180°C/ 150°C |
| material output: | 9.3 kg/hr |
| screw speed: | 200 rpm |
| water added: | 4.1 kg/hr |
| reduced pressure (last section): | 40 mbar |

water content during extru-    42.7 %
sion:

The water content of the granulates is 13.5 % after they have equilibrated at room temperature.

(c) The granulates obtained under (b) are processed using the same injection molding machine described in (c) of Example 1. The processing parameters are the following:

| | |
|---|---|
| temperature profile: | 90°C/ 175°C/ 175°C/ 175°C |
| shot weight: | 7.8 g |
| residence time; | 450 sec |
| injection molding: | 1830 bar |
| back pressure; | 80 bar |
| screw speed: | 180 rpm |

The tensile test pieces thus produced are conditioned and tested on a Zwick tensile test apparatus described in (d) of Example 1.

Results are presented in Table 1.

Example 9

(a) 3000 g of potato starch containing 15.0 % water are placed in a high speed mixer and 5950 g of polyethylene-co-methacrylic acid, sodium salt (component b)) containing 85 % by weight of ethylene and 15 % by weight of methacrylic acid, sold as Surlyn 8940 by Du Pont; 25.5 g of hydrogenated fat (lubricant/ release agent) Boeson VP; 12.8 g of a melt flow accelerator (lecithin) Metarin P are added under stirring. The water content of the final mixture is 8.4 %.

(b) 9000 g of the mixture prepared under (a) are fed through a hopper into the same twin-screw co-rotating extruder described in Example 1.

The extrusion of the mixture is carried out with the following processing parameters:

| | |
|---|---|
| temperature profile: | 20°C/ 80°C/ 100°C/ 80°C |
| material output: | 7.9 kg/hr |
| screw speed: | 200 rpm |
| water added: | 1.1 kg/hr |
| reduced pressure (last section): | 25 mbar |
| water content during extrusion: | 9.5 % |

The granulates having a water content of 15.8 % are brought to a water content of 17 % by spraying water under stirring in a conventional mixer.

(c) The granulates obtained under (b) are processed using the same injection molding machine described in (c) of Example 1. The processing parameters are the following:

| | |
|---|---|
| temperature profile: | 90°C/ 165°C/ 165°C/ 165°C |
| shot weight: | 6 g |
| residence time; | 450 sec |
| injection molding: | 1100 bar |
| back pressure; | 80 bar |
| screw speed: | 180 rpm |

The tensile test pieces thus produced are conditioned and tested on a Zwick tensile test apparatus described in (d) of Example 1.

Results are given in Table 1.

Example 10

(a) 2100 g of potato starch containing 15 % water are placed in a high speed mixer and 765 g of polyethylene-co-acrylic acid, sodium salt (component b)) containing 80 % by weight of ethylene and 20 % by weight of acrylic acid, prepared by neutralizing fluxed polyethylene-co-acrylic acid Primacor 5980 of the Dow Chemical Company with a sodium hydroxide solution; 5950 g of a thermoplastic polyamide elastomer sold as Pebax Ma-4011 by Atochem; 18 g of hydrogenated fat (lubricant release agent) sold as Boeson VP by Boehringer Ingelheim, 9 g of a melt flow accelerator (lecithin) sold as Metarin P by Lucas Meyer are added under stirring. The water content of the final mixture is 6.5 %.

(b) 8000g of the mixture prepared under (a) are fed through a hopper into a Werner & Pfleiderer co-rotating twin screw extruder (model Continua 37).

The temperature profile of the four sections of the barrel is respectively 20°C/ 80°C/ 240°C/ 180°C.

Extrusion is carried out with a mixture output of 8 kg/hr (screw speed 200 rpm). Water is added at the inlet with a flow rate of 1.8 kg/hr. The water content of the material during extrusion is therefore 23.3 %. In the last section of the extruder 500 mbar reduced pressure is applied to remove part of the water as water vapour.

The water content of the granulates is 7 % as measured after they have equilibrated at room temperature. They are brought to a water content of 17 % by spraying water under stirring in a conventional mixer.

(c) The granulates of the pre-blended mixture as obtained under (b) (H$_2$O content: 17 %) are fed through a hopper to an injection molding machine Arburg 329-210-750 for the production of tensile test pieces. The temperature profile of the barrel is: 90°C/ 165°C/ 165°C/ 165°C.

The shot weight is 6.7 g, the residence time 450 sec., the injection pressure 460 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile test apparatus as given in Example 1.

Results are presented in Table 1.

## Example 11

(a) 8900 g of potato starch containing 15.1 % water are placed in a high speed mixer and 3022 g of polyethylene-co-methacrylic acid, sodium salt (component b)) sold as Surlyn 8660 and sold by Du Pont (containing 90 % by weight of ethylene and 10 % by weight of methacrylic acid); 75.65 g of hydrogenated fat (lubricant/release agent) Boeson VP and 37.82 g of a melt flow accelerator (lecithin/Metarin P) are added under stirring. The water content of the final mixture is 11.2 %.

(b) 9000 g of the mixture prepared under (a) are fed through a hopper into a Leistritz twin-screw co-rotating extruder (model LSM 34GL). The extrusion of the mixture is carried out with the following temperature profile: 25°C/ 90°C/ 150°C/ 120°C/ 95°C/ 90°C. The other parameters of the extrusion experiment are the following:

| | |
|---|---|
| material output: | 11.5 kg/hr |
| screw speed: | 120 rpm |
| water added: | 4.6 kg/hr |
| reduced pressure (last section) | 200 mbar |
| water-content during extrusion: | 39.2 % |

The water content of the granulates is 17.3 % as measured after they have equilibrated at room temperature.

(c) The granulates obtained under (b) are processed using an injection molding machine Kloeckner Ferromatic FM 60. The temperature profile of the barrel is 90°C/ 155°C/ 155°C/ 155°C. The other processing parameters are:

| | |
|---|---|
| shot weight: | 20 g |
| residence time: | 450 sec. |
| injection pressure; | 767 bar |
| back pressure: | 80 bar |
| screw speed: | 180 rpm |

The tensile test pieces are of standard ISO design (ISO No R527). They are conditioned and tested on a Zwick tensile test apparatus as described in (d) of Example 1.

Results are presented in Table 1.

## Example 12

(a) 8900 g of potato starch containing 15 % water are placed in a high speed mixer and 6044 g of polyethylene-co-methacrylic acid, sodium salt (component b)) containing 90 % by weight of ethylene and 10 % by weight of methacrylic acid (sold as Surlyn 8660 by Du Pont); 75.65 g of hydrogenated fat (lubricant/ release agent) Boeson VP; 37.82 g of a melt flow accelerator (lecithin) Metarin P are added under stirring. The water content of the final mixture was 8.9 %.

(b) 9000 g of the mixture prepared under (a) are fed through a hopper into the same twin-screw co-rotating extruder described in Example 11.

The extrusion of the mixture is carried out with the following processing parameters:

| | |
|---|---|
| temperature profile: | 25°C/ 90°C/ 150°C/ 170°C/ 120°C/ 95°C/ 90°C |

material output: 11.5 kg/hr
screw speed: 120 rpm
water added: 4.6 kg/hr
reduced pressure (last section): 200 mbar
water content during extrusion: 37.6 %

The water content of the granulates is 17.4 % after they have equilibrated at room temperature.

(c) The granulates of (b) are processed using the same injection molding machine of Example 11. The processing parameters are the following:

temperature profile: 90°C/ 155°C/ 155°C/ 155°C
shot weight: 20 g
residence time; 450 sec
injection molding: 441 bar
back pressure; 80 bar
screw speed: 180 rpm

The tensile test pieces thus produced (ISO Design: R527) are conditioned and tested on a Zwick tensile test apparatus described in (d) of Example 1.

Results are presented in Table 1.

Example 13

Example 11 is repeated by adding to the mixture of section a) 302 g of polyethylene Lupolen 2410T of BASF. The resulting injection molded polymer is tougher than unblended starch polymer as judged by resistance to breaking upon bending.

Example 14

(a) 8900 g of potato starch containing 15.1 % water are placed in a high speed mixer and 510 g of polyethylene-co-acrylic acid, sodium salt, (component b)) containing 80 % by weight of ethylene and 20 % by weight of acrylic acid prepared by neutralizing fluxed polyethylene-co-acrylic acid Primacor 5980 of the Dow Chemical Company with a sodium hydroxyde solution; 510 g of Nylon 12 (component c)) sold as Vestamid L-1700 by Huels Chemie; 75.65 g of hydrogenated fat (lubricant/release agent) Boeson VP; 37.82 g of a melt flow accelerator (lecithin) Metarin P are added under stirring. The water content of the final mixture is 13.4 %.

(b) 9000 g of the mixture prepared under (a) are fed through a hopper into the same twin-screw co-rotating extruder described in Example 1.

The extrusion of the mixture is carried out with the following processing temperature:

temperature profile: 20°C/ 80°C/ 190°C/ 190°C
material output: 9.1 kg/hr
screw speed: 200 rpm
water added: 2.9 kg/hr
reduced pressure (last section): 40 mbar
water content during extrusion: 37.6 %

The water content of the granulates is 9.9 % after they have equilibrated at room temperature. They are brought to a water content of 17 % by spraying water in a standard mixer.

(c) The granulates obtained under (b) are processed using the same injection molding machine described in (c) of Example 1. The processing parameters are the following:

temperature profile: 90°C/ 175°C/ 175°C/ 175°C
shot weight: 8 g
residence time; 450 sec
injection molding: 2220 bar
back pressure; 80 bar
screw speed: 180 rpm

The corresponding injection molded polymers blend is tougher than the unblended starch polymer, as judged by resistance to breaking upon bending.

Example 15

(a) 8000 g of potato starch containing 15.1 % water are placed in a high speed mixer and 765 g of polyvethylene-co-acrylic acid, soidum salt (component b)) prepared by neutralizing fluxed Primacor 5980 (80 % by weight ethylene and 20 % by weight acrylic acid) with a sodium hydroxide solution; 425 g of polyvinyl alcohol-co-vinyl acetate (87 - 89 mole % vinyl alcohol, 11 - 13 mole % vinyl acetate) (component c)) sold as Airvol 540S by Air Products; 425 g of poly(methyl methacrylate) (component c)) sold as Degalan G-6 by Degussa; 68 g of hydrogenated fat (lubricant/ release agent) Boeson VP; 34 g of a melt flow accelerator (lecithin) Metarin P are added under stirring. The water content of the final mixture is 12.4 %.

(b) 9000 g of the mixture prepared under (a) are fed through a hopper into the same twin-screw co-rotating extruder described in Example 1.

The extrusion of the mixture is carried out with the following processing parameters:

| | |
|---|---|
| temperature profile: | 20°C/ 80°C/ 180°C/ 150°C |
| material output: | 9.3 kg/hr |
| screw speed: | 200 rpm |
| water added: | 4.1 kg/hr |
| reduced pressure (last section): | 40 mbar |
| water content during extrusion: | 42.1 % |

The water content of the granulates is 13.5 % after they have equilibrated at room temperature. They are brought to a water content of 17 % by spraying water in a standard mixer.

(c) The granulates obtained under (b) are processed using the same injection molding machine described in (c) of Example 1. The processing parameters are the following:

| | |
|---|---|
| temperature profile: | 90°C/ 175°C/ 175°C/ 175°C |
| shot weight: | 7.8 g |
| residence time; | 450 sec |
| injection molding: | 1850 bar |
| back pressure; | 80 bar |
| screw speed: | 180 rpm |

The corresponding injection molded polymer blend is tougher than the unblended starch polymer, as judged by resistance to breaking upon bending.

Example 16

Example 13 is repeated, replacing polethylene (component c)) Lupolen 2410T by 425 g of polystyrene Polystyrol 144-C sold by BASF.

The corresponding injection molded polymer blend is tougher than the unblended starch polymer, as judged by resistance to breaking upon bending.

Example 17

Example 10 is repeated with the difference that (i) potato starch (H$_2$O content: 15 %) is increased to 8000 g, (ii) the thermoplastic polyamide elastomer (component c)) Pebax Ma-4011 is replaced by 1360 g of thermoplastic polyurethane elastomer Pellethane 2103-80-Ae of the Dow Chemical Company.

The corresponding injection molded polymer blend is tougher than the unblended starch polymer, as judged by resistance to breaking upon bending.

Example 18

Example 1 (Sections a) and b)) is repeated except that the water content is adjusted to 22 %, and the cutter is removed from the die face. A continuous extrudate is obtained which is foamed as a result of the excess water evaporation. The foam is chopped into 30-40 mm lengths and is useful as a loose-fill, packaging insulation material.

Example 19

During each of the injection molding operations in Examples 2 - 17 an experiment is performed to demonstrate the utility of making foams. The molten material is obtained as described in Example 1, Sections a), b) and c) in each case is extruded into the open atmosphere (Section c) instead of being injection molded into a closed mold. In every case the material is converted into a foamed extrudate useful for loose-fill in packaging applications.

Example 20

The granulates from Example 1 are mixed with polystyrene in the proportion of 30 to 70 parts by weight and are treated according to Example 19. The resulting foamed extrudate contains a very fine and uniform cell structure suitable for a variety of uses including structural foam.

**Claims**

1.  A composition consisting of
    a) destructurized starch produced by heating a starch having a water content of 5 to 40% by weight based on the starch/water component, in a closed volume under shear; and at a temperature of 130°C to 190°C above the glass transition and the melting points of its components and at a pressure of up to 150 x 10$^5$ N/m² to form a melt whereby the pressure corresponds at a minimum to the vapour pressure of water at the temperature used and heating the melt for a time long enough to obtain a melting of the molecular structure of the starch granules and a homogenization of the melt;
    b) at least one thermoplastic ethylene-co-acrylic acid copolymer or ethylene-co-methacrylic acid copolymer wherein the copolymers contain carboxyl groups in their salt form;
    c) a thermoplastic polymer which undergoes melt formation at a set processing temperature within the range of 95°C to 190°C and is selected from (i) the group consisting of polyolefines, vinyl polymers, polystyrenes, polyacrylonitriles, polyacetals, thermoplastic polyamides, thermoplastic polyesters, thermoplastic polyurethanes polycarbonates, poly(alkylene terephthalates), polyarylethers, (ii) ethylene vinyl acetate copolymers, styrene/acrylonitrile copolymers, and mixtures thereof;
    d) optionally one or more materials selected from the group consisting of fillers, lubricants, mold release agents, plasticizers, foaming agents, stabilizers, flow accelerators, coloring agents, pigments and mixtures thereof;
    wherein the ratio of the destructurized starch to component b) varies from 99:1 to 95:5, and wherein the ratio of component b) to component c) is from 50:1 to 1:99 and wherein the sum of the components b) and c) constitutes at least 10% and up to 80% by weight of the entire composition.

2.  The composition according to claim 1 wherein the weight ratio of component b) to component c) is from 20:1 to 1:99.

3.  The composition according to claim 1 wherein the weight ratio of component b) to component c) is from 1:10 to 1:50.

4.  The composition according to any one of the claims 1 to 3 wherein component b) contains carboxylate groups of the formula

    -COOM

    wherein M is an alkali cation.

5.  The composition according to claim 4 wherein M is sodium.

6.  The composition according to any one of the claims 1 to 5 wherein component c) is selected from (i) the group consisting of polyethylenes, polypropylenes, polyisobutylenes, poly(vinyl acetate), polystyrenes, thermoplastic polyamides, thermoplastic polyesters, thermoplastic polyurethanes, polycarbonates, poly(alkylene terephthalates).

7.  The composition according to any one of the claims 1 to 6 wherein the polymer of component c) absorbs water at a rate of less than 5% per 100 grams of the polymer at room temperature.

8.  The composition according to any one of the claims 1 to 7 wherein the water content is from 5% to 30% by weight of the starch/water component.

9.  The composition according to any one of the claims 1 to 7 wherein the water content is from 14% to 18% by weight of the starch/water component.

10. The composition according to any one of the claims 1 to 9 in the form of a melt.

EP 0 409 788 B1

11. The composition according to any one of the claims 1 to 9 in a solidified form.

12. The composition according to claim 11 in particulate, granulated form.

13. The composition according to claim 11 in the form of a shaped article selected from the group consisting of containers, bottles, pipes, rods, packing materials, sheets, foams, films,sacks, bags and pharmaceutical capsules.

14. The composition according to claim 12 further melted and processed to form a shaped article selected from the group consisting of containers, bottles, pipes, rods, packing materials, sheets, foams, films, sacks, bags and pharmaceutical capsules.

15. The shaped articles according to claim 13 and claim 14 wherein the shaping process comprises foaming, filming, compression molding, injection molding, blow molding, extruding, co-extruding, vacuum forming, thermoforming and combinations thereof.

16. A thermoplastic destructurized starch product formed by the process comprising:
    1) providing a mixture consisting of:
       - a starch composed mainly of amylose and /or amylopectin and having a water content of from 5% to 40% by weight;
       - at least one polymer as defined in claim 1 as component b);
       - a thermoplastic polymer as defined in claim 1 as component c) ;
       - optionally one or more materials selected from the group consisting of fillers, lubricants, mold release agents, plasticizers, foaming agents, stabilizers, flow accelerators, coloring agents, pigments and mixtures thereof;
    wherein the ratio of the destructurized starch to component b) varies from 99:1 to 95:5, and wherein the ratio of component b) to component c) is from 50:1 to 1:99, and wherein the sum of the components b) and c) constitutes at least 10% and up to 80% by weight of the entire composition;
    2) heating said mixture in the screw and barrel of an injection molding machine or an extruder at a temperature of 130°C to 190°C and at a pressure of up to $150 \times 10^5$ N/m$^2$ to form a melt and heating the melt for a time long enough to obtain a destructurization of the starch and a homogenization of the melt;
    3) shaping the melt into an article; and
    4) allowing the shaped article to cool to a solidified dimensionally stable article.

17. The product according to claim 16 in particulate, granulated or pelletized form.

18. The product according to claim 16 in the form of a shaped article selected from the group consisting of containers, bottles, pipes, rods, packing materials, sheets, foams, films,sacks, bags and pharmaceutical capsules.

19. The product according to claim 17 further melted and processed to form a shaped article selected from the group consisting of containers, bottles, pipes, rods, packing materials, sheets, foams, films, sacks, bags and pharmaceutical capsules.

**Patentansprüche**

1. Eine Zusammensetzung bestehend aus:
    a) destrukturierter Stärke hergestellt mittels Erwärmen einer Stärke mit einem Wassergehalt von 5 bis 40 Gewichts%, bezogen auf den Stärke/ Wasser - Bestandteil, in einem geschlossenen Volumen unter Scherung; und bei einer Temperatur von 130°C bis 190°C oberhalb der Glasübergangsund der Schmelzpunkte ihrer Bestandteile und bei einem Druck von bis zu $150 \times 10^5$ N/m$^2$, um eine Schmelze zu bilden, wobei der Druck mindestens dem Wasserdampfdruck bei den verwendeten Temperaturen entspricht und unter genügend langem Erwärmen der Schmelze, um eine Schmelzung der Molekularstruktur der Stärkegranulate und eine Homogenisierung der Schmelze zu erreichen;
    b) mindestens ein thermoplastisches Äthylen-co-acrylsäure Copolymer oder Äthylen-co-methacrylsäure Copolymer, wobei die Copolymere Carboxylgruppen in Salzform enthalten;
    c) ein thermoplastisches Polymer, welches eine Schmelzbildung bei einer eingestellten Verfahrenstemperatur im Bereich von 95°C bis 190°C aufweist, und ausgewählt ist von (i) der Gruppe umfassend Polyolefine, Vinylpolymere, Polystyrole, Polyacrylnitrile, Polyacetale, thermoplastische Polyamide, thermoplastische Polyester, thermoplastische Polyurethane, Polycarbonate, Poly(alkylenterephthalate), Polyaryläther, (ii) Äthylen - Vinylacetat Copolymere, Styrol/ Acrylnitril Copolymere und deren Mischungen;

d) gegebenenfalls ein oder mehrere Stoffe ausgewählt von der Gruppe umfassend Füllstoffe, Gleitmittel, Formtrennmittel, Plastifizierungsmittel, Schäumungsmittel, Stabilisatoren, Fliessmittel, Farbstoffe, Pigmente und deren Mischungen;

wobei das Verhältnis der destrukturierten Stärke zum Bestandteil b) zwischen 99:1 und 95:5 variiert und wobei die Summe der Bestandteile b) und c) mindestens 10 % und bis zu 80%, bezogen auf das Gesamtgewicht der Zusammensetzung, beträgt.

2. Die Zusammensetzung nach Anspruch 1, wobei das Gewichtsverhältnis von dem Bestandteil b) zum Bestandteil c) zwischen 20:1 und 1:99 liegt.

3. Die Zusammensetzung nach Anspruch 1, wobei das Gewichtsverhältnis von dem Bestandteil b) zum Bestandteil c) zwischen 1:10 und 1:50 liegt.

4. Die Zusammensetzung nach einem der vorhergehenden Ansprüche 1 bis 3, wobei der Bestandteil c) Carboxylgruppen der Formel

- COOM

enthält, wobei M ein Alkalikation bedeutet.

5. Die Zusammensetzung nach Anspruch 4, wobei M Natrium bedeutet.

6. Die Zusammensetzung nach einem der vorhergehenden Ansprüche 1 bis 5, wobei der Bestandteil c) ausgewählt ist von (i) der Gruppe umfassend Polyäthylen, Polypropylen, Polyisobutylen, Poly(vinylacetat), Polystyrole, thermoplastische Polyamide, thermoplastische Polyester, thermoplastische Polyurethane, Polycarbonate, Poly(alkylenterephthalate).

7. Die Zusammensetzung nach einem der vorhergehenden Ansprüche 1 bis 6, wobei das Polymer des Bestandteils c) bei Zimmertemperatur Wasser in einer Menge von weniger als 5 % pro 100 Gramm Polymer absorbiert.

8. Die Zusammensetzung nach einem der vorhergehenden Ansprüche 1 bis 7, wobei der Wassergehalt zwischen 5 % und 30%, bezogen auf das Gewicht des Stärke/Wasser - Bestandteils, liegt.

9. Die Zusammensetzung nach einem der vorhergehenden Ansprüche 1 bis 7, wobei der Wassergehalt zwischen 14 % und 18%, bezogen auf das Gewicht des Stärke/Wasser - Bestandteils, liegt.

10. Die Zusammensetzung nach einem der vorhergehenden Ansprüche 1 bis 9 in Form einer Schmelze.

11. Die Zusammensetzung nach einem der vorhergehenden Ansprüche 1 bis 9 in fester Form.

12. Die Zusammensetzung nach Anspruch 11 in körniger, granulierter Form.

13. Die Zusammensetzung nach Anspruch 11 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

14. Die Zusammensetzung nach Anspruch 12 weiter geschmolzen und verarbeitet, um einen geformten Gegenstand zu bilden, ausgewählt von der Gruppe umfassend Behälter, Flaschen, Rohre, Stäbe, Verpackungsmaterialien, Folien, Schäume, Filme, Säcke, Beutel und pharmazeutische Kapseln.

15. Die geformten Gegenstände nach Anspruch 13 und Anspruch 14, wobei der Formungsvorgang Schäumen, Filmen, Pressformen, Spritzgiessen, Blasformen, Extrudieren, Coextrudieren, Vakuumformen, Thermoformen und deren Kombinationen umfasst.

16. Ein Produkt aus thermoplastischer destrukturierten Stärke geformt durch das Verfahren umfassend:
1) Vorlegen einer Mischung umfassend:

- eine Stärke, hauptsächlich bestehend aus Amylose und/ oder Amylopektin und eines Wassergehalts von 5 bis 40 Gewichts-%;
- mindestens ein Polymer, wie in Anspruch 1 als Bestandteil b) definiert;
- ein thermoplastisches Polymer, wie in Anspruch 1 als Bestandteil c) definiert;
- gegebenenfalls ein oder mehrere Stoffe ausgewählt von der Gruppe umfassend Füllstoffe, Gleitmittel, Formtrennmittel, Plastifizierungsmittel, Schäumungsmittel, Stabilisatoren, Fliessmittel, Farbstoffe, Pigmente und deren Mischungen;

wobei das Verhältnis der destrukturierten Stärke zum Bestandteil b) zwischen 99:1 und 95:5 variiert, und wobei das Verhältnis des Bestandteils b) zum Bestandteil c) zwischen 50:1 und 1:99 liegt, und wobei die Summe der Bestandteile b) und c) mindestens 10% und bis zu 80%, bezogen auf das Gesamtgewicht der Zusammensetzung, beträgt;

2) Erwärmen der besagten Mischung in der Schnecke und der Trommel einer Spritzgiessvorrichtung oder einer Extrudiervorrichtung bei einer Temperatur von 130°C bis 190°C und bei einem Druck von bis zu 150 x 10^5 N/m^2, um eine Schmelze zu bilden und unter genügend langem Erwärmen, um eine Destrukturierung der Stärke und eine Homogenisierung der Schmelze zu erreichen;

3) Formen der Schmelze zu einem Gegenstand; und

4) Abkühlen lassen des geformten Gegenstands zu einem erstarrten dimensionsstabilen Gegenstand.

**17.** Das Produkt nach Anspruch 16 in körniger, granulierter oder tablettierter Form.

**18.** Das Produkt nach Anspruch 16 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

**19.** Das Produkt nach Anspruch 17 weiter geschmolzen und verarbeitet, um einen geformten Gegenstand zu bilden, ausgewählt von der Gruppe umfassend Behälter, Flaschen, Rohre, Stäbe, Verpackungsmaterialien, Folien, Schäume, Filme, Säcke, Beutel und pharmazeutische Kapseln.

## Revendications

**1.** Une composition comprenant

a) de l'amidon déstructuré produit par le chauffage d'un amidon ayant une teneur en eau de 5 à 40% en poids, par rapport au constituant amidon/eau, dans un volume clos sous action de cisaillement; et à une température de 130°C à 190°C au-dessus des points de transition vitreuse et de fusion de ses constituants et à une pression allant jusqu'à 150 x 10^5 N/m^2 pour former une masse fondue, laquelle pression correspond au minimum à la pression de vapeur de l'eau à la température employée et chauffage de la masse fondue pendant un temps assez long afin d'obtenir une fusion de la structure moléculaire des granules d'amidon et une homogénéisation de la masse fondue;

b) au moins un copolymère thermoplastique d'éthylène-co-acide-acrylique ou un copolymère d'éthylène-co-acide-méthacrylique, caractérisé en ce que les copolymères contiennent des groupes carboxyles sous forme de sel;

c) un polymère thermoplastique qui subit une formation d'une masse fondue à une température de procédé réglée entre 95°C et 190°C, et choisi dans (i) le groupe comprenant polyoléfines, polymères de vinyle, polystyrènes, polyacrylonitriles, polyacétales, polyamides thermoplastiques, polyesters thermoplastiques, polyuréthannes thermoplastiques, polycarbonates, poly(alkylène téréphtalates), polyaryléthers, (ii) éthylène/ vinylacétate copolymères, styrène/ acrylonitrile copolymères et leurs mélanges;

d) en option une ou plusieurs matières choisies dans le groupe comprenant des charges minérales (fillers), des lubrifiants, des agents de démoulage, des plastifiants, des agents moussants, des stabilisateurs, des accélérateurs de coulée, des colorants, des pigments et leurs mélanges;

caractérisée en ce que la proportion de l'amidon déstructuré par rapport au constituant b) varie de 99:1 à 95:5 et en ce que la proportion du constituant b) par rapport au constituant c) est de 50:1 à 1:99 et caractérisée en ce que la somme des constituants b) et c) constitue au moins 10% et jusqu'à 80%, par rapport au poids total de la composition.

**2.** La composition selon la revendication 1, caractérisée en ce que la proportion du poids du constituant b) par rapport au constituant c) est de 20:1 à 1:99.

3. La composition selon la revendication 1, caractérisée en ce que la proportion du poids du constituant b) par rapport au constituant c) est de 1:10 à 1:50.

4. La composition selon l'une quelconque des revendications 1 à 3, caractérisée en ce que le constituant b) contient des groupes carboxylates de la formule

-COOM

dans laquelle M est un cation d'alcali.

5. La composition selon la revendication 4, dans laquelle M est un sodium.

6. La composition selon l'une quelconque des revendications 1 à 5, caractérisée en ce que le constituant c) est choisi dans (i) le groupe comprenant polyéthylènes, polypropylènes, polyisobutylènes, poly(vinylacétate), polystyrènes, polyamides thermoplastiques, polyesters thermoplastiques, polyuréthannes thermoplastiques, polycarbonates, poly(alkylène téréphtalates).

7. La composition selon l'une quelconque des revendications 1 à 6, caractérisée en ce que le polymère du constituant c) absorbe de l'eau à un taux inférieur à 5% par 100 grammes de polymère à température ambiante.

8. La composition selon l'une quelconque des revendications 1 à 7, caractérisée en ce que la teneur en eau est de 5% à 30%, par rapport au poids du constituant amidon/eau.

9. La composition selon l'une quelconque des revendications 1 à 7, caractérisée en ce que la teneur en eau est de 14% à 18%, par rapport au poids du constituant amidon/eau.

10. La composition selon l'une quelconque des revendications 1 à 9 sous forme d'une masse fondue.

11. La composition selon l'une quelconque des revendications 1 à 9 sous forme solide.

12. La composition selon la revendication 11 sous forme de particules, de granules.

13. La composition selon la revendication 11 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

14. La composition selon la revendication 12 fondue à nouveau et traitée pour former un article façonné choisi dans le groupe comprenant des récipients, des bouteilles, des tubes, des tiges, des emballages, des feuilles, des mousses, des films, des sacs, des sachets et des capsules pharmaceutiques.

15. Les articles façonnés selon la revendication 13 et la revendication 14 caractérisés en ce que le procédé de façonnage comprend moussage, extrusion de films, moulage par compression, moulage par injection, moulage par soufflage, extrusion, coextrusion, formage sous vide, thermoformage et leurs combinaisons.

16. Un produit d'amidon thermoplastique déstructuré formé par le procédé comprenant:
    1) fourniture d'un mélange comprenant:
    - un amidon, essentiellement formé d'amylose et/ou d'amylopectine et ayant une teneur en eau entre 5% et 40% en poids;
    - au moins un polymère, comme défini dans la revendication 1, en tant que constituant b);
    - un polymère thermoplastique, comme défini dans la revendication 1, en tant que constituant c);
    - en option une ou plusieurs matières choisies dans le groupe comprenant des charges minérales, des lubrifiants, des agents de démoulage, des plastifiants, des agents moussants, des stabilisateurs, des accélérateurs de coulée, des colorants, des pigments et leurs mélanges;
    caractérisé en ce que la proportion de l'amidon déstructuré par rapport au constituant b) varie de 99:1 à 95:5 et en ce que la proportion du constituant b) par rapport au constituant c) est de 50:1 à 1:99 et caractérisé en ce que la somme des constituants b) et c) constitue au moins 10% et jusqu'à 80%, par rapport au poids total de la composition;
    2) chauffage du dit mélange dans une vis et un fût d'un appareil de moulage par injection ou d'extrusion à une température comprise entre 130°C et 190°C et à une pression allant jusqu'à 150 x $10^5$ N/m² pour former une masse fondue et chauffage de la masse fondue pendant un temps assez long afin d'obtenir une déstructuration de l'amidon et une homogénéisation de la masse fondue;

3) façonnage de la masse fondue en un article; et

4) laisser l'article façonné refroidir en un article solide dimentionnellement stable.

17. Le produit selon la revendication 16 sous forme de particules, de granules ou de pastilles,

18. Le produit selon la revendication 16 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

19. Le produit selon la revendication 17 fondu à nouveau et traité pour former un article façonné choisi dans le groupe comprenant des récipients, des bouteilles, des tubes, des tiges, des emballages, des feuilles, des mousses, des films, des sacs, des sachets et des capsules pharmaceutiques.